# EUROPÄISCHE PATENTSCHRIFT

(11) **EP 3 335 288 B1**
(45) Veröffentlichungstag und Bekanntmachung des Hinweises auf die Patenterteilung: **21.08.2024**
(21) Anmeldenummer: 16731554.8
(22) Anmeldetag: 15.06.2016
(51) Int. Cl.: H02H 7/00, B05B 5/10, H02H 3/08, H02H 3/24, H02H 3/44, H02H 9/00, H02H 1/04

(54) **STEUERSCHALTUNG ZUM SCHUTZ GEGEN FUNKENENTLADUNG**
CONTROL CIRCUIT FOR PROTECTING AGAINST SPARK DISCHARGE
CIRCUIT DE COMMANDE POUR PROTÉGER D'UNE DÉCHARGE PAR ÉTINCELLES

(30) Priorität: 12.08.2015 DE 102015215402
(43) Veröffentlichungstag der Anmeldung: 20.06.2018
(73) Patentinhaber: Gema Switzerland GmbH, 9015 St. Gallen (CH)
(72) Erfinder: MAUCHLE, Felix, 9030 Abtwil (CH); VASELLA, Mario, 9475 Sevelen (CH)
(74) Vertreter: Meissner Bolte Partnerschaft mbB
(86) Internationale Anmeldenummer: PCT/EP2016/063785
(87) Internationale Veröffentlichungsnummer: WO 2017/025227

(56) Entgegenhaltungen:
- WO-A1-2010/105738
- CH-A- 532 859
- DE-A1- 3 709 510
- GB-A- 2 115 243
- US-B1- 6 437 963

## Beschreibung

Die vorliegende Erfindung betrifft das Fachgebiet des elektrostatischen Beschichtens. Im Einzelnen betrifft die vorliegende Erfindung eine Schutzmaßnahme zur sicheren Anwendung elektrostatisch unterstützter Beschichtungsverfahren. Die Besonderheit des elektrostatischen Beschichtungsverfahrens liegt in der Anwendung von Hochspannung, die im Allgemeinen mehrere 10.000 Volt beträgt, und gleichzeitigem Erzeugen von explosionsfähigen Lösemittel/Dampf-Luftgemischen oder Staub-Luftgemischen.

Die Druckschrift CH 532 859 betrifft eine Überwachungsvorrichtung zur Verhinderung von Funkenüberschlägen in einer Hochspannungsanlage für Sprühelektroden.

Die Druckschriften WO 2010/105738 A1 und DE 37 09 510 A1 offenbaren jeweils Verfahren zur Betriebssteuerung einer elektrostatischen Beschichtungsanlage.

Beim elektrostatischen Lackieren mit Flüssiglack wird das flüssige Beschichtungsmaterial in einen Nebel von Lacktröpfchen umgewandelt und mit Hilfe der Kräfte des elektrischen Feldes auf dem zu beschichtenden Gegenstand (Werkstück) niedergeschlagen. Hierfür werden die Tröpfchen mittels Hochspannung der Größenordnung von einigen zehn Kilovolt aufgeladen, so dass sie von dem geerdeten Gegenstand (Werkstück) angezogen werden. Das Beschichtungsmaterial kann entweder durch Druckluft, Flüssigkeitsdruck oder durch eine Kombination der genannten Verfahren und andere Zentrifugalkräfte versprüht werden.

Beim Verfahren der elektrostatischen Pulverbeschichtung wird das Beschichtungsmaterial (Beschichtungspulver) mit Hilfe eines Luftstromes von einem Pulverbehälter zu einer elektrostatischen Sprühbeschichtungsvorrichtung hingeführt. Die durch die Sprühbeschichtungsvorrichtung strömenden Pulverteilchen werden mittels einer Hochspannung von einigen 10 kV, die im Allgemeinen von einer Hochspannungsversorgung geliefert wird, aufgeladen. Die aufgeladenen Pulverteilchen werden von dem zu beschichtenden, geerdeten Gegenstand (Werkstück) angezogen und auf diesem niedergeschlagen.

Beim elektrostatischen Beflocken werden kurzstapelige Fasern (Flock) aus einem Vorratsbehälter durch ein elektrisches Feld transportiert. Der Flock wird im elektrischen Feld ausgerichtet und auf mit Klebstoff beschichtete, geerdete Oberflächen des zu beschichtenden Gegenstands aufgebracht. Die Flock-Teilchen haben eine definierte Leitfähigkeit und werden von der elektrostatischen Flockvorrichtung mittels Hochspannung von einigen zehn Kilovolt aufgeladen, bilden Dipole und werden entsprechend der Kraft der Ladungen in Form einer Wolke von dem geerdeten Gegenstand (Werkstück) bzw. von der zu beflockenden Fläche angezogen und haften auf den mit Klebstoff versehenen Flächen.

Da bei den vorgenannten elektrostatischen Beschichtungsverfahren das zerstäubte Beschichtungsmaterial durch Hochspannung von einigen 10.000 Volt aufgeladen wird, ist beim elektrostatischen Beschichten besondere Aufmerksamkeit auf die Vermeidung einer Explosionsgefahr zu legen. Beim elektrostatischen Beschichten kann eine Explosion insbesondere entstehen, wenn die Konzentration von versprühten entzündbaren Beschichtungsstoffen in der Luft innerhalb der Explosionsgrenzen liegt, und wenn eine Zündquelle von ausreichender Energie für diese explosionsfähige Atmosphäre vorhanden ist. Diese Zündquelle kann insbesondere ein elektrischer Lichtbogen oder ein Funken sein.

Darüber hinaus ist besondere Aufmerksamkeit auf die elektrische Gefährdungen durch die beim elektrostatischen Beschichten zum Einsatz kommende Hochspannung von einigen 10.000 Volt zu legen. Ein elektrischer Schlag durch direktes oder indirektes Berühren beispielsweise einer Auflade-Elektrode der Sprühbeschichtungsvorrichtung, kann insbesondere durch Berühren der Auflade-Elektrode hervorgerufen werden.

Von daher liegt der vorliegenden Erfindung die Aufgabe zugrunde, eine möglichst zuverlässig an den jeweiligen Anwendungsfall optimal anpassbare Steuerschaltung zum Schutz einer elektrostatischen Sprühbeschichtungsvorrichtung gegen Funkenentladung anzugeben. Bei den hierin berücksichtigten elektrostatischen Sprühbeschichtungsvorrichtungen handelt es sich insbesondere um solche Vorrichtungen, die zur elektrostatischen Aufladung des zu versprühenden Beschichtungsmaterials eine Hochspannungsversorgung aufweisen bzw. denen zum elektrostatischen Aufladen des zu versprühenden Beschichtungsmaterials eine entsprechende Hochspannungsversorgung zugeordnet ist. Bei dem zu versprühenden Beschichtungsmaterial handelt es sich insbesondere um flüssiges Beschichtungsmaterial (Nasslack) oder um pulverförmiges Beschichtungsmaterial (Beschichtungspulver). Denkbar allerdings ist es auch, dass die vorliegende Erfindung bei Sprühbeschichtungsvorrichtungen zum Einsatz kommt, mit denen kurzstapelige Fasern (Flock) auf mit Klebstoff beschichtete, geerdete Oberflächen eines zu beschichtenden Gegenstands versprüht werden.

Eine weitere Aufgabe der vorliegenden Erfindung liegt darin, eine entsprechende elektrostatische Sprühbeschichtungsvorrichtung anzugeben, bei der wirksam im Betrieb eine Funkenentladung verhindert wird. Darüber hinaus soll ein entsprechendes Verfahren zum elektrostatischen Sprühbeschichten von Gegenständen angegeben werden.

Die der Erfindung zu Grunde liegende Aufgabe wird durch eine Steuerschaltung gemäß dem unabhängigen Patentanspruch 1 gelöst, wobei vorteilhafte Weiterbildungen der erfindungsgemäßen Steuerschaltung in den Ansprüchen 2 bis 10 angegeben sind.

Die der Erfindung zu Grunde liegende Aufgabe wird ferner durch eine Sprühbeschichtungsvorrichtung gemäß Patentanspruch 11 gelöst, sowie durch ein Verfahren zum elektrostatischen Sprühbeschichten von Gegenständen gemäß dem Patentanspruch 13.

Demgemäß wird insbesondere eine Steuerschaltung zum Schutz einer eine Hochspannungsversorgung aufweisenden elektrostatischen Sprühbeschichtungsvorrichtung gegen Funkenentladung angegeben, wobei die Steuerschaltung eine Abschalteinrichtung zum automatischen Abschalten der Hochspannungsversorgung und eine Einrichtung zum Verfassen eines abnormalen Betriebs der Hochspannungsversorgung aufweist. Bei der Hochspannungsversorgung handelt es sich insbesondere um eine der elektrostatischen Sprühbeschichtungsvorrichtung zugeordneten Vorrichtung, die im Allgemeinen aus einem Niederspannungsteil, einem Hochspannungsgenerator, beispielsweise in Gestalt einer Hochspannungskaskade, und einer Auflade-Elektrode zum elektrostatischen Aufladen des zu versprühenden Beschichtungsmaterials (flüssig oder pulverförmig) besteht. Eine Hochspannungskaskade im Sinne der vorliegenden Erfindung ist eine elektrostatische Schaltung, die eine zugeführte Wechselspannung in eine relativ hohe Gleichspannung bis zu einigen 10.000 Volt umwandelt. Diese hohe Spannung wird durch Kaskadierung, d. h. mehrfache Hintereinanderschaltung der Greinacher-Schaltung erzielt. Die Kaskade liefert je nach Anzahl der Dioden und Kondensatoren eine theoretisch beliebig hohe Ausgangsspannung. Praktisch ist jedoch dadurch eine Grenze gesetzt, dass die Kodensatoren in Reihe geschaltet sind, wodurch mit wachsender Zahl von Kondensatoren die Kapazität immer kleiner wird. Dadurch bricht die Ausgangsspannung schließlich bereits bei minimaler Stromentnahme zusammen.

Die bei der erfindungsgemäßen Steuerschaltung zum Einsatz kommende Einrichtung zum Verfassen eines abnormalen Betriebs der Hochspannungsversorgung ist ausgebildet, mindestens einen den Betrieb der Hochspannungsversorgung charakterisierenden Parameter - vorzugsweise kontinuierlich oder zu vorgegebenen Zeiten bzw. Ereignissen - zu überwachen und ein entsprechendes Abschalt-Signal an die Abschalteinrichtung auszugeben, wenn der mindestens eine den Betrieb der Hochspannungsversorgung charakterisierende Parameter einen vorab festgelegten oder festlegbaren Grenzwert über- bzw. unterschreitet und somit ein abnormaler Betrieb der Hochspannungsversorgung erfasst wird.

Auf diese Weise ist sichergestellt, dass in einem abnormalen Betrieb der Hochspannungsversorgung diese vorzugsweise unmittelbar ausgeschaltet wird, so dass wirksam die elektrostatische Sprühbeschichtungsvorrichtung gegen Funkenentladung geschützt ist. Somit können im Betrieb der elektrostatischen Sprühbeschichtungsvorrichtung wirksam Gefährdungen durch Explosion und/oder elektrische Gefährdungen ausgeschlossen werden.

Bei den im Betrieb der Hochspannungsversorgung charakterisierenden Parametern handelt es sich insbesondere um die Höhe (Betrag) der am Ausgang der Hochspannungsversorgung bereitgestellten Ausgangs-Hochspannung, um die Höhe (Betrag) des der Hochspannungsversorgung zugeführten Betriebsstroms und/oder um die Höhe (Betrag) des Sprühstroms von der Auflade-Elektrode der Sprühbeschichtungsvorrichtung zu dem zu beschichtenden Gegenstand.

Hierbei ist es denkbar, den der Hochspannungsversorgung zugeführten Betriebsstroms und/oder den Sprühstrom der Auflade-Elektrode zu dem zu beschichtenden Gegenstand entweder indirekt oder direkt zu erfassen bzw. zu messen.

Eine indirekte Messung des Sprühstroms kann beispielsweise darin bestehen, dass der Betriebsstrom der Hochspannungsversorgung, d. h. der elektrische Strom, welcher durch eine Primärwicklung eines Transformators fließt, an dessen Sekundärwicklung eine Hochspannungs-Kaskadenschaltung mit Gleichrichtern und Kondensatoren angeschlossen ist, gemessen wird. Alternativ hierzu ist es aber auch denkbar, den Sprühstrom indirekt zu bestimmen und zwar in dem der in der Sekundärwicklung zwischen dem Transformator und einer Hochspannungs-Kaskadenschaltung fließender Strom gemessen wird. Der Sprühstrom kann beispielsweise indirekt über die an einem der Auflade-Elektrode vorgeschalteten elektrischen Widerstand abfallende Spannung gemessen werden.

Andererseits ist aber auch eine direkte Messung des Sprühstroms denkbar, um insbesondere unverfälschte Messergebnisse und eine schnelle Reaktion der Steuerschaltung auf Abweichungen zu ermöglichen. Hierzu ist es denkbar, beispielsweise eine Sprühstrommessschaltung im elektrischen Rückstromweg von dem zu beschichtenden Gegenstand zurück in die Hochspannungsversorgung bzw. die Steuerschaltung anzuordnen, um dort den Sprühstrom zu messen.

Gemäß der vorliegenden Erfindung ist ferner ein geschlossenes Regelkreis-System vorgesehen, um die Hochspannungsversorgung der elektrischen Sprühbeschichtungsvorrichtung in einem stromkonstanten Betrieb zu betreiben. Unter dem hierin verwendeten Begriff "stromkonstanter Betrieb" ist ein Betrieb der Hochspannungsversorgung zu verstehen, bei welchem mit Hilfe des geschlossenen Regelkreis-Systems ein Ist-Wert des Hochspannungsstroms auf eine Regeleinrichtung direkt rückgeführt wird. Der Betriebsstrom der Hochspannungsversorgung bzw. der Sprühstrom wird dadurch konstant gehalten, wobei die Ausgangs-Hochspannung der Hochspannungsversorgung lastabhängig zwischen einem minimalen und einem maximalen prozesstechnisch definierten Wert variiert.

Bei der erfindungsgemäßen Steuerschaltung, bei welcher ein geschlossenes Regelkreis-System vorgesehen ist, um die Hochspannungsversorgung in einem stromkonstanten Betrieb zu betreiben, ist die Einrichtung zum Erfassen eines abnormalen Betriebs der Hochspannungsversorgung ausgelegt, die Ausgangs-Hochspannung der Hochspannungsversorgung zu erfassen und ein entsprechendes Abschalt-Signal an die Abschalteinrichtung auszugeben, wenn:
- eine mittlere Änderungsrate der Ausgangs-Hochspannung der Hochspannungsversorgung einen vorab festgelegten oder festlegbaren Grenzwert unterschreitet.

Bei Weiterbildungen der erfindungsgemäßen Steuerschaltung ist vorgesehen, dass die Einrichtung zum Erfassen eines abnormalen Betriebs der Hochspannungsversorgung ausgelegt ist, die Ausgangs-Hochspannung der Hochspannungsversorgung zu erfassen und ein entsprechendes Abschalt-Signal an die Abschalteinrichtung auszugeben, wenn:
- ein momentaner Wert (Betrag) der Ausgangs-Hochspannung der Hochspannungsversorgung einen vorab festgelegten oder festlegbaren Grenzwert unterschreitet; und/oder
- eine momentane Änderungsrate der Ausgangs-Hochspannung der Hochspannungsversorgung einen vorab festgelegten oder festlegbaren Grenzwert unterschreitet.

Die Ausgangs-Hochspannung der Hochspannungsversorgung kann dabei direkt oder indirekt erfasst werden. Eine hierin bevorzugte indirekte Erfassung der Ausgangs-Hochspannung der Hochspannungsversorgung kann beispielsweise derart erfolgen, dass die elektrische Spannung, welche an der Primär- oder Sekundärwicklung eines Transformators anliegt, an dessen Sekundärwicklung eine Hochspannungs-Kaskadenschaltung mit Gleichrichtern und Kondensatoren angeschlossen ist, gemessen wird.

Eine direkte Erfassung der Ausgangs-Hochspannung der Hochspannungsversorgung kann erfolgen, indem am Ausgang der Hochspannungsversorgung die über einem Widerstand abfallende Spannung gemessen wird.

Unter dem hierin verwendeten Begriff "mittlere Änderungsrate der Ausgangs-Hochspannung der Hochspannungsversorgung" ist hierin die durchschnittliche Änderung der Ausgangs-Hochspannung in einem vorzugsweise von dem Bediener der elektrostatischen Sprühbeschichtungsvorrichtung manuell einstellbaren Zeitraum zu verstehen.

Der einstellbare Zeitraum zum Bestimmen der mittleren Änderungsrate der Ausgangs-Hochspannung der Hochspannungsversorgung ist anwendungsspezifisch zu wählen, um auf diese Weise die elektrostatische Sprühbeschichtungsvorrichtung bzw. die der elektrostatischen Sprühbeschichtungsvorrichtung zugeordnete Steuerschaltung an den Einzelfall möglichst optimal anzupassen.

Zusätzlich hierzu ist gemäß einem weiteren Aspekt der vorliegenden Erfindung vorgesehen, dass ferner ein offenes Regelkreis-System vorgesehen ist, um die Hochspannungsversorgung in einem spannungsgesteuerten Betrieb zu betreiben.

Unter dem hierin verwendeten Begriff "spannungsgesteuerten Betrieb" ist ein Betrieb der Hochspannungsversorgung zu verstehen, bei welchem die Ausgangs-Hochspannung der Hochspannungsversorgung nicht rückgeführt wird. Beim spannungsgesteuerten Betrieb wird die Ausgangs-Hochspannung der Hochspannungsversorgung üblicherweise bei einem definierten Betriebsstrom eingestellt. Die Ausgangs-Hochspannung der Hochspannungsversorgung wird aber nicht durch eine Regeleinrichtung konstant gehalten, sie ändert sich in Abhängigkeit von dem Betriebsstrom und dem Lastverhalten der Hochspannungsversorgung.

Bei dem zuletzt genannten Aspekt der vorliegenden Erfindung, bei welchem ein offenes Regelkreis-System vorgesehen ist, zum Betreiben der Hochspannungsversorgung in einem spannungsgesteuerten Betrieb, ist die Einrichtung zum Erfassen eines abnormalen Betriebs der Hochspannungsversorgung ausgelegt, den Betriebsstrom der Hochspannungsversorgung oder den Sprühstrom zu erfassen und ein entsprechendes Abschalt-Signal an die Abschalteinrichtung auszugeben, wenn:
- ein momentaner Wert (Betrag) des Betriebsstromes der Hochspannungsversorgung oder des Sprühstromes einen vorab festgelegten oder festlegbaren Grenzwert überschreitet; und/oder
- eine momentane Änderungsrate des Betriebsstromes der Hochspannungsversorgung oder des Sprühstromes einen vorab festgelegten oder festlegbaren Grenzwert überschreitet; und/oder
- eine mittlere Änderungsrate des Betriebsstromes der Hochspannungsversorgung oder des Sprühstromes einen vorab festgelegten oder festlegbaren Grenzwert überschreitet.

Alternativ oder zusätzlich zu dem zuletzt genannten Aspekt ist gemäß einem weiteren Aspekt der vorliegenden Erfindung ein geschlossenes Regelkreis-System vorgesehen, um die Hochspannungsversorgung in einem spannungskonstanten Betrieb zu betreiben.

Unter dem hierin verwendeten Begriff "spannungskonstanter Betrieb" ist insbesondere ein Betrieb der Hochspannungsversorgung mit direkter Rückführung des Ist-Wertes der Ausgangs-Hochspannung zu verstehen. Beim spannungskonstanten Betrieb wird die eingestellte Ausgangs-Hochspannung der Hochspannungsversorgung durch eine Regeleinrichtung, unabhängig vom variablen Betriebsstrom der Hochspannungsversorgung, bis zur Leistungsgrenze der Hochspannungsversorgung konstant gehalten.

Bei dieser Ausführungsform, bei welcher ein geschlossenes Regelkreis-System vorgesehen ist zum Betreiben der Hochspannungsversorgung in einem spannungskonstanten Betrieb, ist die Einrichtung zum Erfassen eines abnormalen Betriebs der Hochspannungsversorgung ausgelegt, in Betriebsstrom der Hochspannungsversorgung (indirekt oder direkt) zu erfassen und ein entsprechendes A-schalt-Signal an die Abschalteinrichtung auszugeben, wenn:
- ein momentaner Wert (Betrag) des Betriebsstromes der Hochspannungsversorgung oder des Sprühstromes einen vorab festgelegten oder festlegbaren Grenzwert überschreitet; und/oder
- eine momentane Änderungsrate des Betriebsstromes der Hochspannungsversorgung oder des Sprühstromes einen vorab festgelegten oder festlegbaren Grenzwert überschreitet; und/oder
- eine mittlere Änderungsrate des Betriebsstromes der Hochspannungsversorgung oder des Sprühstromes einen vorab festgelegten oder festlegbaren Grenzwert überschreitet.

Bei dem Betriebsstrom der Hochspannungsversorgung bzw. dem Sprühstrom handelt es sich beispielsweise um den dem Eingang der Hochspannungsversorgung zugeführten Strom, d. h. beispielsweise der elektrische Strom, welcher durch eine Primärwicklung eines Transformators fließt, an dessen Sekundärwicklung eine Hochspannungs-Kaskadenschaltung der Hochspannungsversorgung angeschlossen ist.

Alternativ hierzu kann der Betriebsstrom der Hochspannungsversorgung bzw. der Sprühstrom auch indirekt gemessen werden, und zwar beispielsweise durch Messen eines in der Sekundärwicklung zwischen dem Transformator und einer Hochspannungs-Kaskadenschaltung der Hochspannungsversorgung fließenden Stroms.

Alternativ hierzu ist aber auch direkte Messung des Sprühstroms denkbar, was hierin bevorzugt ist.

Bei den beiden zuletzt genannten Ausführungsformen der erfindungsgemäßen Steuerschaltung entspricht die mittlere Änderungsrate des Betriebsstroms der Hochspannungsversorgung die durchschnittliche Änderung des Betriebsstroms in einem vorzugsweise von dem Bediener der elektrostatischen Sprühbeschichtungsvorrichtung manuell einstellbaren Zeitraum. Auf diese Weise sind die Sensibilität und das Ansprechverhalten der Steuerschaltung anwendungsspezifisch einstellbar.

Sämtliche vorgenannte Ausführungsformen haben gemeinsam, dass beim Betrieb der elektrostatischen Sprühbeschichtungsvorrichtung wirksam verhindert wird, dass es zu gefährlichen Entladungen zwischen hochspannungsführenden und geerdeten Teilen kommt, insbesondere zwischen der Auflade-Elektrode der Sprühbeschichtungsvorrichtung und den geerdeten (zu beschichtenden) Gegenstand. Dies wird erreicht, in dem automatisch die Hochspannungsversorgung abgeschaltet wird, infolgedessen die Auflade-Elektrode der elektrostatischen Sprühbeschichtungsvorrichtung entladen wird.

Insbesondere kann auf diese Weise im Normalbetrieb der elektrostatischen Sprühbeschichtungsvorrichtung wirksam ein elektrischer Überschlag verhindert werden, da die Abschalteinrichtung der Steuerschaltung automatisch die Hochspannungsversorgung abschaltet, wenn der Abstand zwischen der Auflade-Elektrode der Sprühbeschichtungsvorrichtung und dem zu beschichtenden Gegenstand zu klein wird.

Gemäß einem weiteren Aspekt der vorliegenden Erfindung ist die Steuerschaltung ferner mit einer Transientschutzeinrichtung versehen, um die Hochspannungsversorgung gegen ein ungewolltes automatisches Abschalten durch die Abschalteinrichtung der Steuerschaltung zu schützen. Dies ist insbesondere beim Einschalten der Hochspannungsversorgung oder bei einem Abändern des Betriebspunkts der Hochspannungsversorgung von Vorteil, da in solchen Fällen leicht die dem Betrieb der Hochspannungsversorgung charakterisierenden Parameter überschwingen, d. h. den kritischen Grenzwert über- bzw. unterschreiten. Durch das vorsehen einer entsprechenden Transientschutzeinrichtung wird solch ein ungewolltes, automatisches Abschalten der Hochspannungsversorgung durch die Abschalteinrichtung wirksam unterdrückt.

Denkbar in diesem Zusammenhang ist es beispielsweise, dass die Transientschutzeinrichtung ausgelegt ist, beim Einschalten der Hochspannungsversorgung oder bei einem Abändern des Betriebspunkts der Hochspannungsversorgung die Abschalteinrichtung der Steuerschaltung für eine vorab festgelegte oder festlegbare Zeitperiode zu deaktivieren. Je nach eingestelltem Betriebspunkt der Hochspannungsversorgung und/oder je nach Anwendung der elektrostatischen Sprühbeschichtungsvorrichtung beträgt diese vorab festgelegte oder festlegbare Zeitperiode vorzugsweise 0,25 bis 4 Sekunden und noch bevorzugter 1 bis 2 Sekunden.

Selbstverständlich sind hier aber auch andere Zeitperioden denkbar, insbesondere Zeitperioden, die von dem Bediener der elektrostatischen Sprühbeschichtungsvorrichtung manuell einstellbar sind.

Alternativ oder zusätzlich hierzu ist es denkbar, dass die Transientschutzeinrichtung ausgelegt ist, nach dem Einschalten der Hochspannungsversorgung oder bei einem Abändern des Betriebspunkts der Hochspannungsversorgung den Grenzwert für das Ausgeben eines Abschalt-Signals an die Abschalteinrichtung zu variieren, und zwar von einem anfänglich relativ unsensiblen Wert auf den vorab festgelegten oder festlegbaren Wert des Grenzwerts. Dies ermöglicht es ebenfalls, dass wirksam verhindert wird, dass beim Einschaltvorgang oder bei einem Abändern des Betriebspunkts der Hochspannungsversorgung diese ungewollt durch die Abschalteinrichtung abgeschaltet wird.

Alternativ oder zusätzlich hierzu ist es ferner denkbar, wenn die Transientschutzeinrichtung ausgelegt ist, ein automatisches Abschalten der Hochspannungsversorgung durch die Abschalteinrichtung nur dann zuzulassen, wenn der mindestens eine der im Betrieb der Hochspannungsversorgung charakterisierende Parameter für eine vorab festgelegte Zeitperiode den entsprechenden vorab festgelegten oder festlegbaren Grenzwert über- bzw. unterschritten hat. Mit dieser Maßnahme werden ebenfalls wirksam Überschwingungen des dem Betrieb der Hochspannungsversorgung charakterisierenden Parameters insbesondere beim Einschaltvorgang der Hochspannungsversorgung oder bei einem Abändern des Betriebspunktes der Hochspannungsversorgung unterdrückt.

Die vorliegende Erfindung ist nicht nur auf eine Steuerschaltung der zuvor beschriebenen Art beschränkt, sondern betrifft gemäß einem weiteren Aspekt auch eine Sprühbeschichtungsvorrichtung zum elektrostatischen Sprühbeschichten von Gegenständen mit Beschichtungsmaterial, insbesondere Beschichtungspulver oder Nasslack, wobei die Sprühbeschichtungsvorrichtung eine Hochspannungsversorgung sowie eine Steuerschaltung der erfindungsgemäßen Art aufweist. In vorteilhafterweise ist dabei die Hochspannungsversorgung wahlweise in einem stromkonstanten Betrieb, in einem spannungskonstanten Betrieb oder in einem spannungsgesteuerten Betrieb betreibbar.

Gemäß einem weiteren Aspekt der vorliegenden Erfindung betrifft diese ferner ein Verfahren zum elektrostatischen Sprühbeschichten von Gegenständen, bei dem Beschichtungsmaterial (flüssig oder pulverförmig) mithilfe einer mit einer Hochspannungsversorgung verbundenen Auflade-Elektrode elektrostatisch aufgeladen und in Richtung eines zu beschichtenden Gegenstands zerstäubt wird, wobei bei diesem Verfahren vorzugsweise kontinuierlich oder zur vorgegebenen Zeit bzw. Ereignissen der Betrieb der Hochspannungsversorgung geprüft wird, und wobei bei einem abnormalen Betrieb der Hochspannungsversorgung automatisch die Hochspannungsversorgung abgeschaltet wird. Bei diesem Verfahren wird zum Erfassen eines abnormalen Betriebs der Hochspannungsversorgung mindestens ein der im Betrieb der Hochspannungsversorgung charakterisierender Parameter überwacht und ein entsprechendes Abschalt-Signal an einer Abschalteinrichtung ausgegeben, wenn der mindestens eine den Betrieb der Hochspannungsversorgung charakterisierenden Parameter einen vorab festgelegten oder festlegbaren Grenzwert über- oder unterschreitet.

Die Erfindung wird im Folgenden mit Bezug auf die Zeichnungen anhand von einer bevorzugten Ausführungsform als Beispiel beschrieben.

In den Zeichnungen zeigen:
- FIG. 1:: schematisch eine exemplarische Ausführungsform einer elektrostatischen Sprühbeschichtungsvorrichtung, die in der vorliegenden Erfindung verwendet werden kann; und
- FIG. 2:: ein exemplarisches Hochspannungs-Sprühstrom-Diagramm der Sprühbeschichtungsvorrichtung gemäß FIG. 1.

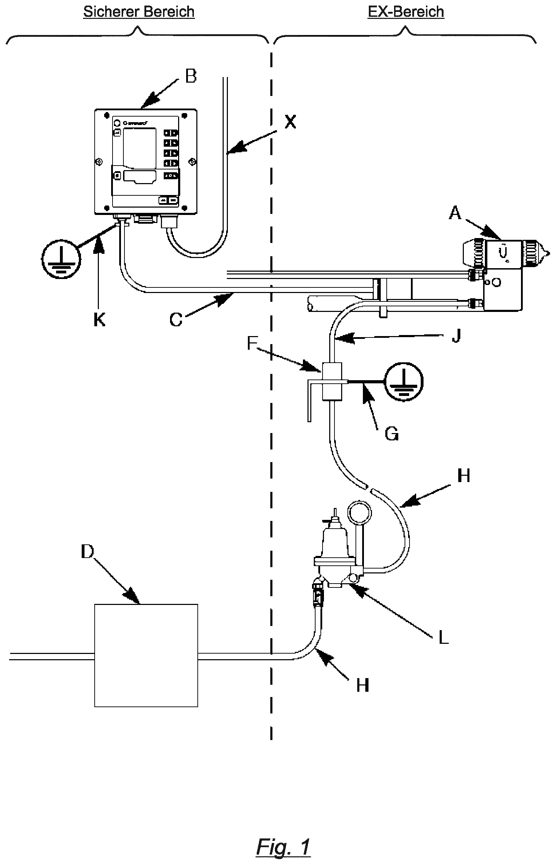

Die in FIG. 1 schematisch gezeigte Sprühbeschichtungsvorrichtung weist eine manuelle oder automatische Sprühpistole zum Besprühen von Beschichtungsmaterial in Form von Flüssigkeit oder vorzugsweise Pulver auf einen zu beschichtenden Gegenstand (nicht in FIG. 1 dargestellt). Dabei wird angenommen, dass der zu beschichtende Gegenstand aus einem elektrisch leitenden Material besteht und an Erdpotenzial angeschlossen ist. Die zu beschichtenden Gegenstände können bei automatischen Sprühbeschichtungsvorrichtungen durch eine nicht gezeigte Fördervorrichtung an der Sprühpistole vorbei transportiert werden, so dass sie dadurch in den Sprühstrahl der Sprühpistole gelangen.

Die Sprühpistole ist mit mindestens einer Auflade-Elektrode (Hochspannungselektrode) zum elektrostatischen Aufladen des zu versprühenden Beschichtungsmaterials versehen. Diese Auflade-Elektrode wird von einem Hochspannungserzeuger mit Gleichstrom-Hochspannung im Bereich zwischen 1 kV und 150 kV, vorzugsweise einen dazwischen liegenden Wert, versorgt.

Der Hochspannungserzeuger kann in bekannter Weise einen Transformator zum Hochtransformieren einer niedrigen Wechselspannung in eine höhere Wechselspannung und eine Kaskadenschaltung enthalten, welche in bekannter Weise eine Vielzahl von Gleichrichtern und Kondensatoren enthält und die Wechselspannung in die Gleichstrom-Hochspannung umwandelt.

Die niedrige Wechselspannung wird von einem Oszillator in Abhängigkeit von einer Steuerspannung erzeugt, welcher eine Stellgröße für die Hochspannung der Auflade-Elektrode ist. Der Oszillator kann ein Teil des Hochspannungserzeugers sein und als solcher in der Sprühpistole integriert sein, oder aber auch in einem Steuergerät integriert sein, welches insgesamt eine Regeleinrichtung bildet.

Die Regeleinrichtung enthält einen Betriebsparameter-Speicher, welchem über einen Datentransferweg von einer Dateneingabestation, beispielsweise einem übergeordneten Rechner oder manuell, z. B. über eine Tastatur, variabel einstellbar mindestens ein Hochspannungsbegrenzungswert und mindestens ein Sprühstrombegrenzungswert je für den maximalen erreichbaren Wert an der Hochspannungselektrode eingebbar und darin speicherbar sind. Vorzugsweise sind mehrere solcher Werte für verschiedene Betriebssituationen, insbesondere für verschiedene zu beschichtende Objekte und verschiedene Sprühbeschichtungsmaterialien speicherbar. Die gespeicherten Werte können bei einer anderen Ausführungsform nicht verstellbare Festwerte sein.

Der Hochspannungsbegrenzungswert wird von dem Betriebsparameter-Speicher in eine Hochspannungsbegrenzungsschaltung eingegeben. Der Sprühstrombegrenzungswert wird von dem Betriebsparameter-Speicher in einen Sprühstromregler eingegeben.

Der von einem zu beschichtenden Gegenstand auf Erde schließende Sprühstrom der Auflade-Elektrode wird von einer Sprühstrommessschaltung auf der mit Erde verbundenen Seite des zu beschichtenden Gegenstands gemessen und als Sprühstrom-Istwert ebenfalls in den Sprühstromregler eingegeben. Der Sprühstromregler vergleicht den Sprühstrom-Istwert mit dem Sprühstrombegrenzungswert und erzeugt in Abhängigkeit hiervon eine Hochspannungs-Reglergröße, welche von dem Sprühstromregler an die Hochspannungsbegrenzungsschaltung gegeben wird. Der Sprühstromregler ist vorzugsweise ein P-I-Regler (Proportional-Integral-Regler).

Die Hochspannungsbegrenzungsschaltung erzeugt in Abhängigkeit von dem Hochspannungsbegrenzungswert und der Hochspannungs-Reglergröße die Steuerspannung, welche in Form einer Gleichstrom-Eingangsspannung dem Oszillator zugeführt wird und die Stellgröße für die Hochspannung der Auflade-Elektrode ist. Die Hochspannungsbegrenzungsschaltung bewirkt, dass für den Fall, dass die Hochspannungs-Reglergröße größer oder gleich dem Hochspannungsbegrenzungswert ist, der Gleichspannungswert der Steuerspannung gleich dem Hochspannungsbegrenzungswert ist. Ferner bewirkt die Hochspannungsbegrenzungsschaltung, dass in allen den Fällen, wo die Hochspannungs-Reglergröße kleiner als der Hochspannungsbegrenzungswert ist, die Steuerspannung gleich der Hochspannungs-Reglergröße ist.

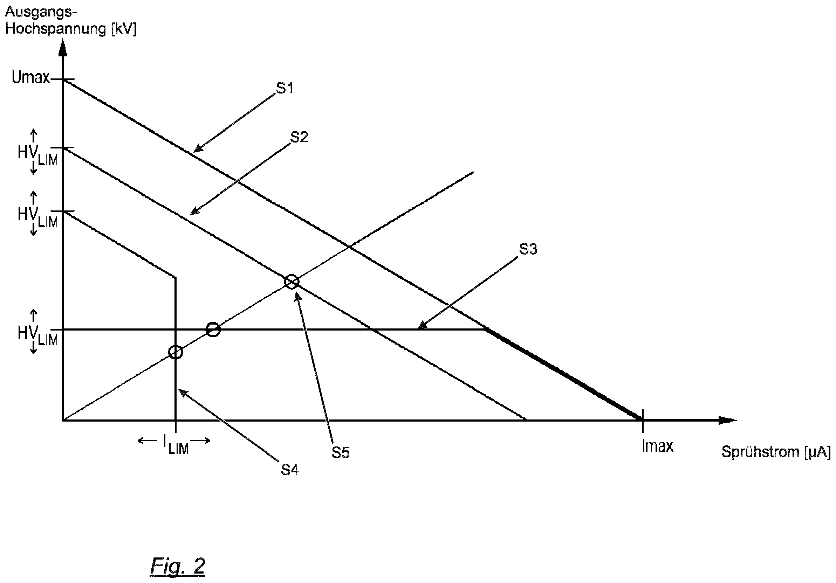

FIG. 2 zeigt auf der horizontalen Achse den Sprühstrom (gemessen in Mikroampere) und auf der vertikalen Achse die korrespondierende Hochspannung (gemessen in kV). Die oberste Kennlinie ist eine Standart-Kennlinie. Sie zeigt, die bei bekannten Einrichtungen mit kleiner werdendem Abstand zwischen der Auflade-Elektrode und einem zu beschichtenden Gegenstand der Sprühstrom der Auflade-Elektrode ansteigt und gleichzeitig die Hochspannung abfällt. Die Hochspannung hat ihren maximal Wert bei größt möglichem Abstand bzw. unendlich großem Abstand des zu beschichtenden Gegenstands oder eines anderen elektrisch leitenden Gegenstands von der Auflade-Elektrode.

Die mittlere Kurve in FIG. 2 betrifft eine Beispielform, bei welcher die maximale Gleichstrom-Hochspannung der Hochspannungselektrode auf einen Maximalwert begrenzt ist, jedoch keine Strombegrenzung vorgenommen wurde.

Die unterste Kurve in FIG. 2 ergibt sich mit der vorstehend beschriebenen Schaltung, bei welcher sowohl der Sprühstrom als auch die Hochspannung je auf einen Maximalwert begrenzt sind.

Die Sprühbeschichtungsvorrichtung, wie sie beispielsweise in FIG. 1 schematisch dargestellt ist, ist mit einer Steuerschaltung versehen (der hier beispielsweise in Gestalt von Software der Steuereinrichtung hinterlegt sein kann). Diese Steuerschaltung ermöglicht es, dass automatisch die der Sprühpistole zugeordnete Hochspannungsversorgung abgeschaltet wird, wenn mit Hilfe der Steuerschaltung ein abnormaler Betrieb erfasst wird.

Zum Erfassen eines abnormalen Betriebs kann mit Hilfe der Steuerschaltung das Verhältnis zwischen dem Sprühstrom und der Hochspannung an der Auflade-Elektrode überwacht werden. Dieses Verhältnis spiegelt unmittelbar den Abstand zwischen der Auflade-Elektrode zu einem geerdeten Gegenstand dar. Die Steuerschaltung schaltet mit Hilfe einer Ausschalteinrichtung automatisch die Hochspannungsversorgung ab, sobald das Verhältnis aus Sprühstrom und Hochspannung einen vorab festgelegten oder festlegbaren Grenzwert unterschreitet. Alternativ hierzu wird die zeitliche Änderungsrate des Verhältnisses zwischen dem Sprühstrom und der Spannung überwacht. Wenn sich ein geerdeter Gegenstand der Auflade-Elektrode der Sprühbeschichtungsvorrichtung mit hoher Geschwindigkeit nähert, schaltet die Steuerschaltung automatisch die Hochspannungsversorgung ab. Dieser dynamische Betrieb ist bevorzugt, da so die Gefahr eines ungewollten automatischen Abschaltens minimiert wird.

Vorzugsweise sind die entsprechenden Grenzwerte, bei denen ein Abschalt-Signal imitiert wird, von dem Bediener der Sprühbeschichtungsvorrichtung manuell und an die jeweiligen Begebenheiten und Anwendungen anpassbar. Denkbar in diesem Zusammenhang wäre es aber auch, dass diese Grenzwerte über ein Bussystem, insbesondere Feldbussystem, an die Steuereinrichtung übermittelt werden.

Bei der Sprühbeschichtungsvorrichtung, wie sie exemplarisch in FIG. 1 dargestellt ist, ist ferner eine vorzugsweise in Gestalt von Software ausgeführte Transientschutzeinrichtung vorgesehen, um insbesondere beim Einschalten der Hochspannungsversorgung oder bei einem Abändern des Betriebspunkts der Hochspannungsversorgung ein ungewolltes automatisches Abschalten der Hochspannungsversorgung zu verhindern. Denn gerade beim Einschaltvorgang ist nicht auszuschließen, dass die den Betrieb der Hochspannungsversorgung charakterisierenden Parameter zum Überschwingen neigen, so dass die Gefahr besteht, dass der das automatische Abschalten der Hochspannungsversorgung triggernde Grenzwert über- bzw. unterschritten wird. Denkbar in diesem Zusammenhang ist es, das die Transientschutzeinrichtung ausgelegt ist, beim Einschaltvorgang der Hochspannungsversorgung oder bei einem Abändern des Betriebspunkts der Hochspannungsversorgung das automatische Abschalten der Hochspannungsversorgung für eine vorab festgelegte oder festlegbare Zeitperiode von insbesondere 1 bis 2 Sekunden deaktiviert.

Alternativ oder zusätzlich hierzu ist es denkbar, wenn die das automatische Abschalten der Hochspannungsversorgung initiierenden Grenzwerte beim Einschaltvorgang oder beim Abändern des Betriebspunkts der Hochspannungsversorgung erst sukzessiv den vorab festgelegten oder festlegbaren Wert annehmen, und zwar ausgehend von einem zunächst relativ unsensiblen Wert.

Die Erfindung ist nicht auf das mit Bezugnahme auf die Zeichnungen beschriebene exemplarische Ausführungsbeispiel beschränkt, sondern ergibt sich aus dem Gegenstand des Anspruchs 1 bzw. des Anspruchs 13.

### Bezugszeichenliste

- A: Sprühpistole
- B: Steuereinrichtung mit Steuerschaltung
- C: Stromversorgungpistole
- D: Fluidquelle
- F: Fluidschlauchhalterung
- G: Erdleitung
- H: Fluidschlauch
- J: Fluidzufuhr zur Pistole
- K: Erdleitung
- L: Fluidregulator
- X: Stromversorgungsteuereinrichtung

- S1: offenes Regelkreis-System bei maximaler Ausgangs-Hochspannung der Hochspannungsversorgung

- S2: offenes Regelkreis-System bei 80 % der maximalen Ausgangs-Hochspannung der Hochspannungsversorgung

- S3: geschlossenes Regelkreis-System und Hochspannungsversorgung im spannungskonstanten Betrieb

- S4: geschlossenes Regelkreis-System und Hochspannungsversorgung im stromkonstanten Betrieb

- S5: Betriebspunkt

## Patentansprüche

1. Steuerschaltung zum Schutz einer eine Hochspannungsversorgung aufweisenden elektrostatischen Sprühbeschichtungsvorrichtung gegen Funkenentladung, wobei die Steuerschaltung eine Abschalteinrichtung zum automatischen Abschalten der Hochspannungsversorgung und eine Einrichtung zum Erfassen eines abnormalen Betriebs der Hochspannungsversorgung aufweist, wobei die Einrichtung zum Erfassen eines abnormalen Betriebs der Hochspannungsversorgung ausgebildet ist, mindestens einen den Betrieb der Hochspannungsversorgung charakterisierenden Parameter zu überwachen und ein entsprechendes Abschalt-Signal an die Abschalteinrichtung auszugeben, wenn der mindestens eine den Betrieb der Hochspannungsversorgung charakterisierende Parameter einen vorab festgelegten oder festlegbaren Grenzwert über- oder unterschreitet,
wobei ferner ein geschlossenes Regelkreis-System vorgesehen ist zum Betreiben der Hochspannungsversorgung in einem stromkonstanten Betrieb, und wobei die Einrichtung zum Erfassen eines abnormalen Betriebs der Hochspannungsversorgung ausgelegt ist, die Ausgangs-Hochspannung der Hochspannungsversorgung zu erfassen und ein entsprechendes Abschalt-Signal an die Abschalteinrichtung auszugeben, wenn:
- eine mittlere Änderungsrate der Ausgangs-Hochspannung der Hochspannungsversorgung einen vorab festgelegten oder festlegbaren Grenzwert unterschreitet,
wobei die mittlere Änderungsrate der Ausgangs-Hochspannung der Hochspannungsversorgung die durchschnittliche Änderung der Ausgangs-Hochspannung in einem einstellbaren Zeitraum ist.

2. Steuerschaltung nach Anspruch 1,
wobei die Einrichtung zum Erfassen eines abnormalen Betriebs der Hochspannungsversorgung ferner ausgelegt ist, ein entsprechendes Abschalt-Signal an die Abschalteinrichtung auszugeben, wenn:
- ein momentaner Wert der Ausgangs-Hochspannung der Hochspannungsversorgung einen vorab festgelegten oder festlegbaren Grenzwert unterschreitet.

3. Steuerschaltung nach Anspruch 1 oder 2,
wobei ferner ein offenes Regelkreis-System vorgesehen ist zum Betreiben der Hochspannungsversorgung in einem spannungsgesteuerten Betrieb, und wobei die Einrichtung zum Erfassen eines abnormalen Betriebs der Hochspannungsversorgung ausgelegt ist, den Betriebsstrom der Hochspannungsversorgung oder den Sprühstrom zu erfassen und ein entsprechendes Abschalt-Signal an die Abschalteinrichtung auszugeben, wenn:
- ein momentaner Wert des Betriebsstromes der Hochspannungsversorgung oder des Sprühstromes einen vorab festgelegten oder festlegbaren Grenzwert überschreitet; und/oder
- eine mittlere Änderungsrate des Betriebsstromes der Hochspannungsversorgung oder des Sprühstromes einen vorab festgelegten oder festlegbaren Grenzwert überschreitet.

4. Steuerschaltung nach einem der Ansprüche 1 bis 3,
wobei ferner ein geschlossenes Regelkreis-System vorgesehen ist zum Betreiben der Hochspannungsversorgung in einem spannungskonstanten Betrieb, und wobei die Einrichtung zum Erfassen eines abnormalen Betriebs der Hochspannungsversorgung ausgelegt ist, den Betriebsstrom der Hochspannungsversorgung oder den Sprühstrom zu erfassen und ein entsprechendes Abschalt-Signal an die Abschalteinrichtung auszugeben, wenn:
- ein momentaner Wert des Betriebsstromes der Hochspannungsversorgung oder des Sprühstromes einen vorab festgelegten oder festlegbaren Grenzwert überschreitet; und/oder
- eine mittlere Änderungsrate des Betriebsstromes der Hochspannungsversorgung oder des Sprühstromes einen vorab festgelegten oder festlegbaren Grenzwert überschreitet.

5. Steuerschaltung nach Anspruch 3 oder 4,
wobei die mittlere Änderungsrate des Betriebsstromes der Hochspannungsversorgung oder des Sprühstromes die durchschnittliche Änderung des Betriebsstroms in einem einstellbaren Zeitraum ist.

6. Steuerschaltung nach einem der Ansprüche 1 bis 5,
wobei ferner eine Transientschutzeinrichtung vorgesehen ist, zum Schutz der Hochspannungsversorgung gegen ein ungewolltes automatisches Abschalten durch die Abschalteinrichtung, insbesondere beim Einschalten der Hochspannungsversorgung oder bei einem Abändern des Betriebspunkts der Hochspannungsversorgung.

7. Steuerschaltung nach Anspruch 6,
wobei die Transientschutzeinrichtung ausgelegt ist, beim Einschalten der Hochspannungsversorgung oder bei einem Abändern des Betriebspunkts der Hochspannungsversorgung die Abschalteinrichtung für eine vorab festgelegte oder festlegbare Zeitperiode zu deaktivieren.

8. Steuerschaltung nach Anspruch 7,
wobei die vorab festgelegte oder festlegbare Zeitperiode insbesondere in Abhängigkeit des eingestellten Betriebspunkts der Hochspannungsversorgung gewählt ist und vorzugsweise zwischen 0,25 bis 4 Sekunden und noch bevorzugter zwischen 1 bis 2 Sekunden beträgt.

9. Steuerschaltung nach einem der Ansprüche 6 bis 8,
wobei die Transientschutzeinrichtung ausgelegt ist, den Grenzwert für das Ausgeben eines Abschalt-Signals an die Abschalteinrichtung nach dem Einschalten der Hochspannungsversorgung oder einem Abändern des Betriebspunkts der Hochspannungsversorgung zu variieren und zwar von einem anfänglich relativ unsensiblen Wert auf den vorabfestgelegten Wert.

10. Steuerschaltung nach einem der Ansprüche 6 bis 9,
wobei die Transientschutzeinrichtung ausgelegt ist, ein automatisches Abschalten der Hochspannungsversorgung durch die Abschalteinrichtung nur dann zuzulassen, wenn der mindestens eine den Betrieb der Hochspannungsversorgung charakterisierende Parameter für eine vorab festgelegte Zeitperiode den entsprechend vorab festgelegte oder festlegbaren Grenzwert über- bzw. unterschritten hat.

11. Sprühbeschichtungsvorrichtung zum elektrostatischen Sprühbeschichten von Gegenständen mit Beschichtungsmaterial, insbesondere Beschichtungspulver oder Nasslack, wobei die Sprühbeschichtungsvorrichtung Folgendes aufweist:
- eine Hochspannungsversorgung; und
- eine Steuerschaltung nach einem der Ansprüche 1 bis 10.

12. Sprühbeschichtungsvorrichtung nach Anspruch 11,
wobei die Hochspannungsversorgung wahlweise in einem stromkonstanten Betrieb, einem spannungskonstanten Betrieb oder einem spannungsgesteuerten Betrieb betreibbar ist.

13. Verfahren zum elektrostatischen Sprühbeschichten von Gegenständen, bei dem Beschichtungsmaterial mit Hilfe einer mit einer Hochspannungsversorgung verbundenen Auflade-Elektrode elektrostatisch aufgeladen und in Richtung eines zu beschichtenden Gegenstands zerstäubt wird, wobei mindestens ein den Betrieb der Hochspannungsversorgung charakterisierender Parameter überwacht und ein Abschalt-Signal an eine Abschalteinrichtung ausgegeben wird, wenn der mindestens eine den Betrieb der Hochspannungsversorgung charakterisierende Parameter einen vorabfestgelegten oder festlegbaren Grenzwert über- oder unterschreitet, wobei die Abschalteinrichtung dann automatisch die Hochspannungsversorgung abschaltet, wobei die Hochspannungsversorgung in einem stromkonstanten Betrieb betrieben wird, und wobei die Ausgangs-Hochspannung der Hochspannungsversorgung erfasst und ein entsprechendes Abschalt-Signal an die Abschalteinrichtung ausgegeben wird, wenn:
- eine mittlere Änderungsrate der Ausgangs-Hochspannung der Hochspannungsversorgung einen vorab festgelegten oder festlegbaren Grenzwert unterschreitet,
wobei die mittlere Änderungsrate der Ausgangs-Hochspannung der Hochspannungsversorgung die durchschnittliche Änderung der Ausgangs-Hochspannung in einem einstellbaren Zeitraum ist.

14. Verfahren nach Anspruch 13,
wobei ferner ein entsprechendes Abschalt-Signal an die Abschalteinrichtung ausgegeben wird, wenn:
- ein momentaner Wert der Ausgangs-Hochspannung der Hochspannungsversorgung einen vorab festgelegten oder festlegbaren Grenzwert unterschreitet.

## Claims

1. A control circuit for protecting an electrostatic spray coating apparatus having a high voltage supply against spark discharge, wherein the control circuit comprises a disconnect device for automatically disconnecting the high voltage supply and a device for detecting an abnormal operation of the high voltage supply, wherein the device for detecting an abnormal operation of the high voltage supply is designed to monitor at least one parameter characterizing the operation of the high voltage supply and to output a corresponding disconnect signal to the disconnect device when the at least one parameter characterizing the operation of the high voltage supply exceeds or falls below a predefined or definable limit value,
wherein a closed control loop system is further provided for operating the high voltage supply in a current-constant operation, and wherein the device for detecting an abnormal operation of the high voltage supply is designed to detect the output high voltage of the high voltage supply and to output a corresponding disconnect signal to the disconnect device when:
- a mean rate of change of the output high voltage of the high voltage supply falls below a predefined or definable limit value,
wherein the mean rate of change of the output high voltage of the high voltage supply is the average change in the output high voltage within a definable period of time.

2. The control circuit according to claim 1,
wherein the device for detecting an abnormal operation of the high voltage supply is further designed to output a corresponding disconnect signal to the disconnect device when:
- an instantaneous value of the output high voltage of the high voltage supply falls below a predefined or definable limit value.

3. The control circuit according to claim 1 or 2,
wherein an open control loop system is further provided for operating the high voltage supply in a voltage-controlled operation, and wherein the device for detecting an abnormal operation of the high voltage supply is designed to detect the operating current of the high voltage supply or the spray current and to output a corresponding disconnect signal to the disconnect device when:
- an instantaneous value of the operating current of the high voltage supply or the spray current exceeds a predefined or definable limit value; and/or
- a mean rate of change of the operating current of the high voltage supply or the spray current exceeds a predefined or definable limit value.

4. The control circuit according to one of claims 1 to 3,
wherein a closed control loop system is further provided for operating the high voltage supply in a voltage-constant operation, and wherein the device for detecting an abnormal operation of the high voltage supply is designed to detect the operating current of the high voltage supply or the spray current and to output a corresponding disconnect signal to the disconnect device when:
- an instantaneous value of the operating current of the high voltage supply or the spray current exceeds a predefined or definable limit value; and/or
- a mean rate of change of the operating current of the high voltage supply or the spray current exceeds a predefined or definable limit value.

5. The control circuit according to claim 3 or 4,
wherein the mean rate of change of the operating current of the high voltage supply or the spray current is the average change in the operating current within a definable period of time.

6. The control circuit according to one of claims 1 to 5,
wherein a transient protection device is further provided to protect the high voltage supply against an unwanted automatic disconnect by the disconnect device, particularly upon activation of the high voltage supply or upon modification of the high voltage supply operating point.

7. The control circuit according to claim 6,
wherein the transient protection device is designed to deactivate the disconnect device for a predefined or definable period of time particularly when the high voltage supply is activated or the high voltage supply operating point is modified.

8. The control circuit according to claim 7,
wherein the predefined or definable period of time is in particular selected as a function of the set high voltage supply operating point and is preferably between 0.25 and 4 seconds and more preferentially between 1 and 2 seconds.

9. The control circuit according to one of claims 6 to 8,
wherein the transient protection device is designed to vary the limit value for outputting a disconnect signal to the disconnect device after the activation of the high voltage supply or a modification of the high voltage supply operating point, and that from an initially relatively insensitive value to the predefined value.

10. The control circuit according to one of claims 6 to 9,
wherein the transient protection device is designed to only allow an automatic disconnect of the high voltage supply by the disconnect device when the at least one parameter characterizing the high voltage supply operation respectively exceeds or falls below the corresponding predefined or definable limit value for a defined period of time.

11. A spray coating apparatus for electrostatically spray coating objects with coating material, particularly coating powder or liquid coating, wherein the spray coating apparatus comprises the following:
- a high voltage supply; and
- a control circuit according to one of claims 1 to 10.

12. The spray coating apparatus according to claim 11,
wherein the high voltage supply is selectively operable in a current-constant operation, a voltage-constant operation or a voltage-controlled operation.

13. A method for electrostatically spray coating objects in which coating material is electrostatically charged by a charging electrode connected to a high voltage supply and atomized in the direction of an object to be coated, wherein at least one parameter characterizing the operation of the high voltage supply is monitored and a disconnect signal is output to a disconnect device when the at least one parameter characterizing the operation of the high voltage supply exceeds or falls below a predefined or definable limit value, whereby the disconnect device then automatically disconnects the high voltage supply,
wherein the high voltage supply is operated in a current-constant operation, and wherein the output high voltage of the high voltage supply is detected and a corresponding disconnect signal output to the disconnect device when:
- a mean rate of change of the output high voltage of the high voltage supply falls below a predefined or definable limit value,
wherein the mean rate of change of the output high voltage of the high voltage supply is the average change in the output high voltage within a definable period of time.

14. The method according to claim 13,
wherein a corresponding disconnect signal is further output to the disconnect device when:
- an instantaneous value of the output high voltage of the high voltage supply falls below a predefined or definable limit value.

## Revendications

1. Circuit de commande pour protéger un dispositif de revêtement par pulvérisation électrostatique, présentant une alimentation haute tension, contre une décharge disruptive, le circuit de commande présentant un dispositif de coupure automatique de l'alimentation haute tension et un dispositif de détection d'un fonctionnement anormal de l'alimentation haute tension, le dispositif de détection d'un fonctionnement anormal de l'alimentation haute tension étant conçu pour surveiller au moins un paramètre caractérisant le fonctionnement de l'alimentation haute tension, et pour émettre un signal de coupure correspondant vers le dispositif de coupure si ledit au moins un paramètre caractérisant le fonctionnement de l'alimentation haute tension dépasse vers le haut ou vers le bas une valeur limite définie ou définissable au préalable,
dans lequel est en outre prévu un système de régulation en boucle fermée pour faire fonctionner l'alimentation haute tension à courant constant, et le dispositif de détection d'un fonctionnement anormal de l'alimentation haute tension est conçu pour détecter la haute tension de sortie de l'alimentation haute tension et pour émettre un signal de coupure correspondant vers le dispositif de coupure si :
- un taux de variation moyen de la haute tension de sortie de l'alimentation haute tension dépasse vers le bas une valeur limite définie ou définissable au préalable,
le taux de variation moyen de la haute tension de sortie de l'alimentation haute tension étant la variation moyenne de la haute tension de sortie pendant une période de temps réglable.

2. Circuit de commande selon la revendication 1,
dans lequel le dispositif de détection d'un fonctionnement anormal de l'alimentation haute tension est en outre conçu pour émettre un signal de coupure correspondant vers le dispositif de coupure si :
- une valeur instantanée de la haute tension de sortie de l'alimentation haute tension dépasse vers le bas une valeur limite définie ou définissable au préalable.

3. Circuit de commande selon la revendication 1 ou 2,
dans lequel est en outre prévu un système de régulation en boucle ouverte pour faire fonctionner l'alimentation haute tension dans un mode commandé par la tension, et
le dispositif de détection d'un fonctionnement anormal de l'alimentation haute tension est conçu pour détecter le courant de fonctionnement de l'alimentation haute tension ou le courant de pulvérisation et pour émettre un signal de coupure correspondant vers le dispositif de coupure si :
- une valeur instantanée du courant de fonctionnement de l'alimentation haute tension ou du courant de pulvérisation dépasse vers le haut une valeur limite définie ou définissable au préalable ; et/ou
- un taux de variation moyen du courant de fonctionnement de l'alimentation haute tension ou du courant de pulvérisation dépasse vers le haut une valeur limite définie ou définissable au préalable.

4. Circuit de commande selon l'une des revendications 1 à 3,
dans lequel est en outre prévu un système de régulation en boucle fermée pour faire fonctionner l'alimentation haute tension à tension constante, et
le dispositif de détection d'un fonctionnement anormal de l'alimentation haute tension est conçu pour détecter le courant de fonctionnement de l'alimentation haute tension ou le courant de pulvérisation et pour émettre un signal de coupure correspondant vers le dispositif de coupure si :
- une valeur instantanée du courant de fonctionnement de l'alimentation haute tension ou du courant de pulvérisation dépasse vers le haut une valeur limite définie ou définissable au préalable ; et/ou
- un taux de variation moyen du courant de fonctionnement de l'alimentation haute tension ou du courant de pulvérisation dépasse vers le haut une valeur limite définie ou définissable au préalable.

5. Circuit de commande selon la revendication 3 ou 4,
dans lequel le taux de variation moyen du courant de fonctionnement de l'alimentation haute tension ou du courant de pulvérisation est la variation moyenne du courant de fonctionnement pendant une période de temps réglable.

6. Circuit de commande selon l'une des revendications 1 à 5,
dans lequel est en outre prévu un dispositif de protection contre les transitoires pour protéger l'alimentation haute tension contre une coupure automatique involontaire par le dispositif de coupure, en particulier lors de la mise en service de l'alimentation haute tension ou lors d'une modification du point de fonctionnement de l'alimentation haute tension.

7. Circuit de commande selon la revendication 6,
dans lequel le dispositif de protection contre les transitoires est conçu pour désactiver le dispositif de coupure pour une période de temps définie ou définissable au préalable, lors de la mise en service de l'alimentation haute tension ou lors d'une modification du point de fonctionnement de l'alimentation haute tension.

8. Circuit de commande selon la revendication 7,
dans lequel la période de temps définie ou définissable au préalable est choisie en particulier en fonction du point de fonctionnement réglé de l'alimentation haute tension et est de préférence comprise entre 0,25 et 4 secondes et de préférence encore entre 1 et 2 secondes.

9. Circuit de commande selon l'une des revendications 6 à 8,
dans lequel le dispositif de protection contre les transitoires est conçu pour faire varier la valeur limite pour l'émission d'un signal de coupure vers le dispositif de coupure après la mise en service de l'alimentation haute tension ou après une modification du point de fonctionnement de l'alimentation haute tension, pour la faire passer d'une valeur initiale relativement peu sensible à la valeur définie au préalable.

10. Circuit de commande selon l'une des revendications 6 à 9,
dans lequel le dispositif de protection contre les transitoires est conçu pour n'autoriser une coupure automatique de l'alimentation haute tension par le dispositif de coupure que si ledit au moins un paramètre caractérisant le fonctionnement de l'alimentation haute tension a dépassé vers le haut ou vers le bas la valeur limite correspondante définie ou définissable au préalable, pour une période de temps définie au préalable.

11. Dispositif de revêtement par pulvérisation pour le revêtement par pulvérisation électrostatique d'objets avec un matériau de revêtement, en particulier une poudre de revêtement ou une peinture liquide, le dispositif de revêtement par pulvérisation comprenant :
- une alimentation haute tension ; et
- un circuit de commande selon l'une des revendications 1 à 10.

12. Dispositif de revêtement par pulvérisation selon la revendication 11,
dans lequel l'alimentation haute tension peut fonctionner sélectivement selon un mode à courant constant, un mode à tension constante ou un mode à tension contrôlée.

13. Procédé de revêtement d'objets par pulvérisation électrostatique, dans lequel le matériau de revêtement est chargé électrostatiquement à l'aide d'une électrode de charge reliée à une alimentation haute tension et est pulvérisé en direction d'un objet à revêtir,
dans lequel au moins un paramètre caractérisant le fonctionnement de l'alimentation haute tension est surveillé, et un signal de coupure est émis vers un dispositif de coupure si ledit au moins un paramètre caractérisant le fonctionnement de l'alimentation haute tension dépasse vers le haut ou vers le bas une valeur limite définie ou définissable au préalable, le dispositif de coupure coupant alors automatiquement l'alimentation haute tension,
l'alimentation haute tension est exploitée en mode à courant constant, et la haute tension de sortie de l'alimentation haute tension est détectée et un signal de coupure correspondant est émis vers le dispositif de coupure si :
- un taux de variation moyen de la haute tension de sortie de l'alimentation haute tension dépasse vers le bas une valeur limite définie ou définissable au préalable,
le taux de variation moyen de la haute tension de sortie de l'alimentation haute tension étant la variation moyenne de la haute tension de sortie pendant une période de temps réglable.

14. Procédé selon la revendication 13,
dans lequel un signal de coupure correspondant est en outre émis vers le dispositif de coupure si :
- une valeur instantanée de la haute tension de sortie de l'alimentation haute tension dépasse vers le bas une valeur limite définie ou définissable au préalable.
